# EUROPÄISCHE PATENTSCHRIFT

(11) **EP 0 957 565 B1**
(45) Veröffentlichungstag und Bekanntmachung des Hinweises auf die Patenterteilung: **17.09.2003**
(21) Anmeldenummer: 99108283.5
(22) Anmeldetag: 27.04.1999
(51) Int. Cl.: H02K 7/102

(54) **Elektromotor mit Bremse**
Electric motor with brake
Moteur électrique avec frein

(30) Priorität: 14.05.1998 DE 19821730; 21.08.1998 DE 19838171
(43) Veröffentlichungstag der Anmeldung: 17.11.1999
(73) Patentinhaber: Sew-Eurodrive GmbH & Co. KG, 76646 Bruchsal (DE)
(72) Erfinder: Pfann, Jochen, 75447 Sternenfels (DE); Flörchinger, Gerhard, 67376 Harthausen (DE)
(74) Vertreter: Bohnenberger, Johannes, Dr.

(56) Entgegenhaltungen:
- WO-A-97/48176
- DE-A- 4 126 672
- US-A- 5 186 288

## Beschreibung

Die Erfindung betrifft einen Elektromotor mit einer elektromagnetisch betätigbaren Bremse nach dem Oberbegriff des Patentanspruchs 1.

Aus DE 41 26 672 C2 ist ein Elektromotor mit einer elektromagnetisch betätigbaren Bremse bekannt. Die Bremse weist zwischen einem Magnetkörper eines Elektromagneten und einer Bremsscheibe eine axial bewegbare Ankerplatte auf, die drehfest gegenüber einer Welle des Elektromotors geführt ist. Die Welle ist von einem Brems-Lagerschild des Elektromotors gelagert, das einen endseitigen Abschluß eines Gehäuses des Elektromotors bildet. Die Welle erstreckt sich durch das Brems-Lagerschild hindurch auf die Außenseite des Brems-Lagerschildes. Beim Einfallen der Bremse, also nach dem Ausschalten des Stromes durch den Elektromagneten, wird die Ankerplatte durch Federkraft gegen Bremsbeläge eines Belagträgers gedrückt, der mit der Welle an der Außenseite des Brems-Lagerschildes verbunden ist. Somit bremst die Ankerplatte durch Reibung an dem Bremsbelag des Belagträgers dessen Rotationsbewegung ab, sobald das Magnetfeld des Elektromagneten hinreichend abgeklungen ist.

Beim Lüften der Bremse, also insbesondere beim Einschalten des Stromes durch den Elektromagneten, wird eine Kraft auf die Ankerplatte ausgeübt, insbesondere eine anziehende magnetische, die stärker als die mechanische Gegenkraft der Federn ist, so daß die Ankerplatte sich von dem Belagträger löst und zur Anlage an den Magnetkörper der Bremse kommt.

Die Führung der Ankerplatte verhindert, daß die Ankerplatte um die Rotationsachse der Welle rotiert, und wird bei dem bekannten Elektromotor durch axiale Bohrungen oder in axialer Richtung verlaufende Ausnehmungen in der Ankerplatte realisiert, durch die sich in axialer Richtung jeweils Bolzen oder Schrauben erstrecken, die gleichzeitig den Magnetkörper der Bremse an dem Brems-Lagerschild des Elektromotors befestigen.

Durch diese Bolzen bzw. Schrauben wird auch die Distanz in axialer Richtung zwischen dem Brems-Lagerschild des Elektromotors und dem Magnetkörper der Bremse festgelegt, so daß ein axiales Spiel für die Betätigung der Bremse bzw. die axiale Bewegung der Ankerplatte definiert ist. Durch Nachstellen der Bolzen bzw. Schrauben kann das axiale Spiel verkleinert werden, um einen Abrieb der Bremsbeläge an der Belagträgerscheibe auszugleichen.

Bekannt ist auch ein Elektromotor mit Bremse der in DE 41 26 672 C2 beschriebenen Art, bei dem der Elektromotor einen Klemmenkasten für den elektrischen Anschluß des Elektromotors und der Bremse aufweist. Von dem Klemmenkasten sind durchgehende Kabel zur Stromversorgung der Bremse bzw. deren Elektronik durch das bremsseitige Gehäuseende des Elektromotors zur Bremse durchgeführt.

Bei der in DE 41 26 672 C2 beschriebenen Bremse handelt es sich um eine sogenannte Einbaubremse, die direkt an den Elektromotor angebaut ist. Die Bremse kann daher kompakt aufgebaut sein. Die Baulänge, das Gewicht und der Fertigungsaufwand sind somit geringer als bei sogenannten Anbaubremsen, die separat aufgebaute Bremsen sind und an dem Gehäuse des Elektromotors angesetzt werden.

Aus der US-A-5,136,288 ist eine Anbaubremse bekannt, die an einem stirnseitig außenliegenden Ende des Elektromotors an einem Flansch angeschraubt wird. Um das Gewicht der Anbaubremse tragen zu können, ist der Flansch verhältnismäßig dick und stabil aufgebaut. Die Außenseite des Flansches dient als Bremsfläche, an die der mit der Welle rotierende Belagträger beim Einfallen der Bremse gedrückt wird. Von der Reibfläche aus gesehen weist der Belagträger, wie auch bei der vorstehend beschriebenen Einbaubremse, an seiner abgewandten Seite einen Bremsbelag auf, der beim Einfallen der Bremse Reibungsarbeit an der Ankerplatte leistet. Auch die Ankerplatte der Anbaubremse wird durch Bolzen oder Schrauben gegen ein Mitrotieren mit der Motorwelle gesichert, wobei die Bolzen oder Schrauben gleichzeitig der Befestigung des Elektromagneten an dem Flansch dienen.

Bei der Montage oder bei Wartungsarbeiten an bekannten Elektromotoren mit elektromagnetisch betätigbaren Bremsen kann vielfach die Bremse nur zusammen mit dem Brems-Lagerschild des Elektromotors montiert bzw. demontiert werden. In anderen Fällen kann die Bremse zwar von dem am Elektromotor befestigten Brems-Lagerschild abgenommen werden, befinden sich aber außer dem Belagträger noch weitere Teile zwischen dem Bremsschild der Bremse und dem Bremslagerschild des Elektromotors, die einzeln montiert werden müssen, bzw. die sich bei der Demontage unbeabsichtigt lösen und herunterfallen können. Beispiele für solche zusätzlichen Teile sind Druckfedern, die einen Bremsspulenkern der Bremse über Druckringe gegen den Anschlag von langen Befestigungsschrauben drücken, und Distanzhülsen zum Festlegen der axialen Distanz zwischen Bremsschild und Brems-Lagerschild.

Beim Einleiten des Bremsvorganges, d. h. beim Einfallen der Bremse, sind zudem bei den vorstehend beschriebenen bekannten Elektromotoren mit Bremsen die Ankerplatte und/oder die Befestigungsbolzen bzw. die Befestigungsschrauben oder Distanzhülsen einem Verschleiß ausgesetzt, da infolge des Bremsdrehmomentes die Ankerplatte gegen die Bolzen bzw. Schrauben schlägt. Die aneinanderschlagenden Teile bestehen üblicherweise alle aus Metall, was zu einem hohen Verschleiß führt. Weiterhin ist das durch das Anschlagen erzeugte Geräusch häufig störend. Lärmgrenzwerte am Arbeitsplatz können unter Umständen nicht eingehalten werden. Auch sind der Montageaufwand bzw. Demontageaufwand und der Aufwand für die Fertigung bei vielen Einzelteilen erheblich.

Werden bei der Demontage von Bremsen, die an einem Elektromotor mit Kabeldurchführung zur Bremse befestigt sind, die Arbeiten nicht mit größter Vorsicht und Sorgfalt ausgeführt, kann es auβerdem zu Beschädigungen der Kabel kommen oder können die Kabel gar abgerissen werden.

Aufgabe der vorliegenden Erfindung ist es, einen Elektromotor mit einer betriebssicheren elektromagnetisch betätigbaren Bremse der eingangs genannten Art anzugeben, bei dem der Aufwand für die Montage und Demontage der Bremse möglichst gering ist.

Die Aufgabe wird durch einen Elektromotor mit den Merkmalen des Anspruchs 1 gelöst. Weiterbildungen sind Gegenstand der abhängigen Ansprüche.

Erfindungsgemäß ist die Bremse vorkomplettiert ausgebildet und an das Gehäuse des Elektromotors anschraubbar.

Bei der Montage der Bremse muß daher lediglich der Bremsrotor drehsicher mit der Welle des Elektromotors verbunden werden und muß die Bremse an dem Gehäuse befestigt, insbesondere angeschraubt, werden. Die Montage weiterer Einzelteile, wie Distanzhülsen, Druckfedern und dergleichen entfällt. Damit ist insbesondere ein Auswechseln der Bremse durch eine Ersatzbremse in kürzester Zeit möglich. Vor allem beim Einsatz in Produktionsanlagen zur Serienfertigung können somit die wartungsbedingten Stillstandszeiten kurz gehalten werden. Auch muß das Brems-Lagerschild des Elektromotors nicht entfernt werden, so daß der Elektromotor während der Wartungsarbeiten weitgehend vor Verschmutzung geschützt bleibt. Die Vorkomplettierung hat zudem den Vorteil, daß das Zusammensetzen der Bremse am Fertigungsort schneller und damit kostengünstiger erfolgen kann als am Einsatzort der Bremse.

Vorzugsweise ist eine Steckereinrichtung vorgesehen zum Zuführen von Strom zu der Bremsspule des Elektromagnets der Bremse, die beim Befestigen der Bremse, insbesondere dem Anschrauben an das Gehäuse des Elektromotors zusammensteckbar ist. Auf diese Weise bleiben die Leitungsverbindungen zwischen dem Elektromotor und der Bremse frei von Beanspruchungen und werden daher auch ohne besondere Sorgfalt nicht beschädigt. Weiterhin vereinfacht sich die Montage zusätzlich, da die elektrischen Verbindungen nicht erst durch Anschrauben von Kabeln hergestellt werden müssen. Insbesondere bei geeigneter Integration der Steckereinrichtung in das Gehäuse des Elektromotors und/oder in die Bremse wird die elektrische Verbindung einfach durch Ansetzen der Bremse an das Gehäuse hergestellt.

Besonders bevorzugt wird eine Weiterbildung, bei der die Führungseinrichtung, in der die Ankerplatte im wesentlichen drehfest aber in Richtung der Welle des Elektromotors axial verschiebbar ist, als Ring ausgebildet ist, der mit dem Magnetkörper verbunden, insbesondere verschraubt ist. Der Ring kann insbesondere im Spritzgußverfahren aus einem Kunststoff gefertigt sein. In jedem Fall aber übernimmt der Ring mehrere Funktionen, nämlich eine Gehäusefunktion und die Führungsfunktion für die Ankerplatte, so daß ein hoher Grad an Integration und Modularität erreicht ist. Gegenüber mehreren Bolzen oder Schrauben, die bei bekannten Elektromotoren die Führungsfunktion übernehmen, hat der Ring den Vorteil eines einzigen Bauteils oder einer Bauteilegruppe, das bzw. die einfacher und kostengünstiger montiert werden kann.

Vorzugsweise ist durch den Ring in axialer Richtung eine Distanz zwischen dem Brems-Lagerschild und dem Magnetkörper der Bremse festgelegt, so daß ein festes, nicht nachstellbares axiales Spiel für die Betätigung der Bremse definiert ist. Dabei wird insbesondere ein Bremsbelag bzw. werden Bremsbeläge mit hoher Abriebsfestigkeit verwendet, so daß ein Auswechseln erst nach vielen Bremszyklen erforderlich ist. Bei dieser Weiterbildung übernimmt der Ring auch die Funktion der Distanzfestlegung zwischen dem Brems-Lagerschild des Elektromotors und dem Magnetkörper der Bremse. Das wartungstechnisch aufwendige Nachstellen der Distanz entfällt somit. Durch präzise Fertigung des Ringes kann die Distanz ein für allemal im Vorhinein bei der Fertigung festgelegt werden. Um geringfügig voneinander differierende Distanzen einstellen zu können, bietet es sich an, eine Mehrzahl von unterschiedlichen Ringen herzustellen und auf Lager zu halten, die im Bedarfsfall eingesetzt werden können. Damit ist in seltenen Fällen, in denen ein Nachstellen des axialen Spiels für die Betätigung der Bremse dennoch nötig ist, auch ein Einstellen der Distanz einfach durch Auswechseln des Rings möglich. Auch kann die Distanz auf diese Weise für unterschiedliche Einsatzzwecke einer Bremse angepaßt werden. Vorzugsweise ist der Ring lediglich mit kurzen Schrauben (im Vergleich zu langen Schrauben zur Befestigung der Bremse an dem Elektromotor) an dem Bremsschild der Bremse angeschraubt. Ein Auswechseln des Ringes ist somit in kürzester Zeit möglich.

Bevorzugtermaßen weist der Ring zumindest eine nutartige, sich in axialer Richtung erstreckende Führungsaussparung zur Aufnahme eines Vorsprungs der Ankerplatte auf. Alternativ kann der Ring einen Vorsprung und die Ankerplatte eine Ausnehmung aufweisen. In jedem Fall ist eine zuverlässige Führung gegeben, die eine Rotation der Ankerplatte mit der Welle des Elektromotors beim Bremsvorgang verhindert. Insbesondere wenn der Ring aus Kunststoff gefertigt ist, kommen beim Bremsen die stoß- und geräuschdämpfenden Eigenschaften von Kunststoffen zur Geltung. Der Verschleiß ist gering.

Günstig ist eine Ausgestaltung der erfindungsgemäßen Bremse, bei der die Führungseinrichtung und der Magnetkörper Dichteinrichtungen zur Abdichtung der vorkomplettierten Bremse aufweisen. Beispielsweise durch umlaufende Dichtringe, die in Nuten des Schildes eingesetzt werden, können somit die beweglichen Teile der Bremse wirksam vor dem Eindringen von Schmutz bewahrt werden. Dies trägt zur Verlängerung der wartungsintervalle bei.

Vorzugsweise weist der Ring erste Teile einer Steckereinrichtung auf und weist das Brems-Lagerschild zweite Teile der Steckereinrichtung auf, die der Zuführung von Strom zu der Bremsspule und/oder zu elektronischen Schaltungen der Bremse dienen. Die ersten und zweiten Teile der Steckereinrichtung sind derart ausgebildet, daß sie beim Anschrauben der Bremse an das Gehäuse miteinander in elektrischen Kontakt kommen. Insbesondere sind die ersten Teile der Steckereinrichtung so in den Ring integriert, daß diese ohne exakte Ausrichtung der Bremse bei der Montage auf die zweiten Teile aufgesteckt werden können, wobei die Steckereinrichtung die Bremse exakt an die richtige Montageposition führt. Anschließend ist die Bremse lediglich noch an das Gehäuse des Elektromotors anzuschrauben.

Zweckmäßigerweise ist der Bremsrotor, wie auch die Ankerplatte, axial verschiebbar angeordnet. Ein Mitnehmer, der mit der Welle verbunden ist, ist vorzugsweise vorgesehen, um den Bremsrotor drehsicher mitzunehmen.

Vorzugsweise kommt der Bremsrotor beim Bremsvorgang in Angriff an ein Reibblech, das an dem Brems-Lagerschild angeordnet ist und leistet bei stromloser Bremsspule dort Bremsarbeit.

Bevorzugt wird auch eine Ausgestaltung, bei der das Reibblech mittels eines Bajonett-verschlusses an der Führungseinrichtung befestigt wird. Beim Bremsvorgang kommt der axial bewegliche Bremsrotor zur beidseitigen Anlage an das Reibblech und an die Ankerplatte. Bei dieser Ausgestaltung kann die komplette Bremse inklusive dem Reibblech ohne Demontage des Brems-Lagerschildes ausgetauscht werden.

In besonders vorteilhafter Ausgestaltung weist der Bremsrotor einen in axialer Richtung einstückig durchgehenden Bremskörper auf zur Erzeugung von Bremsreibung auf der Ankerplatte und gegebenenfalls an dem Brems-Lagerschild bzw. auf dem Reibblech. Insbesondere bei Verwendung eines langlebigen Materials für den Bremsrotor und bei Verwendung eines Ringes als Führungseinrichtung für die Ankerplatte kann somit ein Nachstellen der Bremse vermieden werden.

Gegenüber bekannten Ausführungen von Bremsrotoren, bei denen ein Belagträger einseitig oder beidseitig separate Bremsbeläge trägt, können somit wegen der geringeren Teilevielfalt auch geringere Abmessungstoleranzen bei der Herstellung eingehalten werden, so daß es möglich ist, ohne Nacharbeiten einen SollWert für das axiale Spiel zum Betätigen der Bremse einzuhalten.

Bekannt sind auch Ausführungen des Bremsrotors, bei denen die stirnseitigen Bremsflächen des Bremsrotors zur Erzeugung von Bremsreibung auf der Ankerplatte und gegebenenfalls an dem Bremslagerschild unterbrochen ist bzw. mit mehreren separaten Bremsbelägen besetzt ist. Vorteilhafterweise hat der Bremsrotor bei einer Weiterbildung eine stirnseitige im wesentlichen rotationssymmetrische Bremsfläche zur Erzeugung von Bremsreibung auf der Ankerplatte und gegebenenfalls eine zweite solche Bremsfläche zur Erzeugung von Bremsreibung an dem Brems-Lagerschild bzw. auf dem Reibblech. Somit können die Bremsflächen gegenüber bekannten Konstruktionen vergrößert werden, was sich verlängernd auf die Lebensdauer der Bremsbeläge bzw. des insbesondere einstückigen Bremsrotors auswirkt.

Eine Ausführungsform der vorliegenden Erfindung wird nunmehr anhand der Zeichnung erläutert. Die Erfindung ist jedoch nicht auf diese Ausführungsform beschränkt. Die einzelnen Figuren der Zeichnung zeigen:
- Fig. 1: einen gestuften Querschnitt durch eine Ausführungsform der erfindungsgemäßen Bremse;
- Fig. 2: einen halbseitigen Längsschnitt entlang der Linie C-E in Fig. 1,
- Fig. 3: einen gewinkelten Längsschnitt entlang der Linie B-D in Fig. 1,
- Fig. 4: eine stirnseitige Ansicht der vorkomplettierten Bremse mit eingesetztem Reibblech, und
- Fig. 5: einen gewinkelten und gestuften Längsschnitt entlang der Linie G-H in Fig. 4

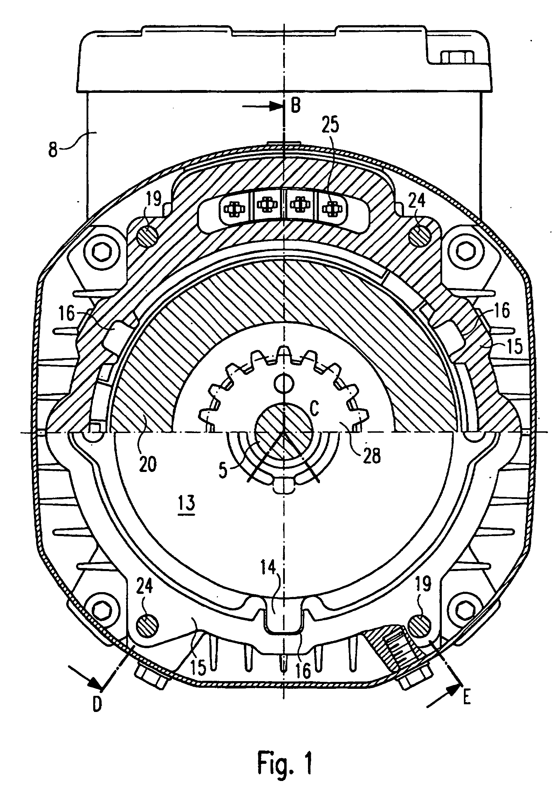

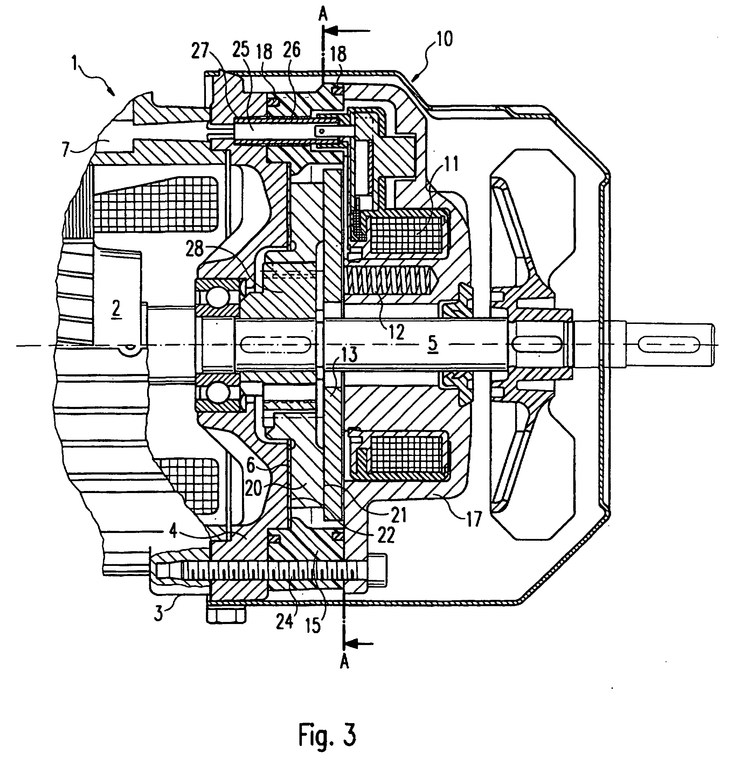

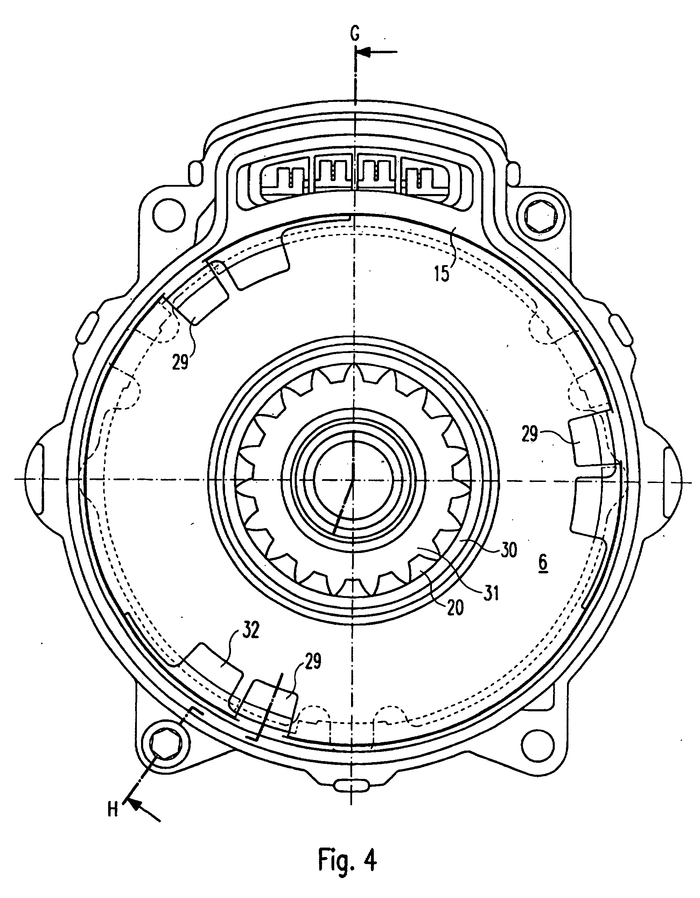

Fig. 1 zeigt einen gestuften Querschnitt entlang der Linie A-A in Fig. 3. Wie am besten aus Fig. 3 erkennbar ist, ist eine vorkomplettierte Bremse 10 mit dem Brems-Lagerschild 4 eines Elektromotors 1 verschraubt. Die Lage der beiden, bezüglich dem Zentrum der Welle 5 des Elektromotors 1 einander gegenüberliegenden langen Schrauben 24, mit denen die Schraubverbindung zwischen der Bremse 10 und dem Elektromotor 1 hergestellt ist, ist am besten aus Fig. 1 erkennbar. Der Elektromotor 1 weist einen Rotor 2 auf, der mit einer Welle 5 verbunden ist, die sich durch das endseitige Brems-Lagerschild 4 des Elektromotors 1 hindurcherstreckt. Das Brems-Lagerschild 4 bildet den bremsseitigen Abschluß des Gehäuses 3 des Elektromotors 1. Wie aus Fig. 3 erkennbar ist, weist das Brems-Lagerschild 4 eine vorspringende, kreisscheibenförmige Endfläche auf, die mit einem Reibblech 6 besetzt ist. Das Reibblech 6 ist mittels eines Bajonett-Verschlusses auswechselbar an der Bremse 10 befestigt, wie noch genauer anhand von Fig. 4 erläutert wird.

Die Welle 5 des Rotors 2 ragt so weit aus dem Brems-Lagerschild 4 heraus, daß die Bremse 10 und weitere, nicht näher beschriebenen Einrichtungen außerhalb des Gehäuses 3 um die Welle 5 herum angeordnet sind. Die Bremse 10 weist eine Bremsspule 11 auf, mit der eine magnetische anziehende Kraft auf eine Ankerplatte 13 ausgeübt werden kann, um die Ankerplatte 13 an dem Magnetkörper 17 zur Anlage zu bringen. Dieser anziehenden Kraft entgegen wirken Druckkräfte von Druckfedern 12, von denen in dem Längsschnitt von Fig. 3 nur eine erkennbar ist. Der Magnetkörper 17, die Bremsspule 11, die Ankerplatte 13 und ein Bremsrotor 20 erstrecken sich im wesentlichen rotationssymetrisch um die Welle 5 des Elektromotors 1 herum. Ein Mitnehmer 28 ist als einziges für die Bremsfunktion der Bremse 10 unmittelbar wichtiges Bauteil nicht bereits bei der Her-stellung der Bremse 10 vorkomplettiert worden. Der Bremsrotor 20 ist drehfest aber axial verschiebbar auf den Mitnehmer 28 aufgesetzt, der drehsicher mit der Welle 5 verbunden ist. Der Bremsrotor 20 weist eine erste, ankerplattenseitige Bremsfläche 21 und eine zweite, reibblechseitige Bremsfläche 22 auf, die jeweils rotätionssymetrisch ausgebildet sind. Der Bremsrotor 20 ist im Bereich zwischen der ersten 21 und der zweiten 22 Bremsfläche einstückig ausgebildet und besteht aus einem abriebfesten Material, um ein Nachstellen der Bremse in axialer Richtung aufgrund von Abrieb zu vermeiden.

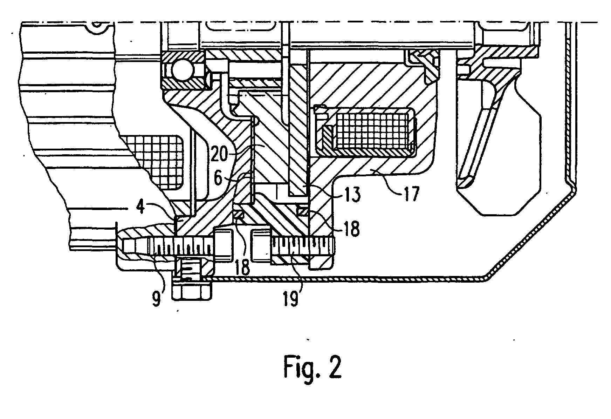

Die vorkomplettierte Bremse 10 weist weiterhin einen Führungsring 15 auf, der wie-Fig. 1 am besten zeigt, die Welle 5, die Ankerplatte 13 und den Bremsrotor 20 in Umfangsrichtung rundherum geschlossen umläuft. Der Führungsring 15 weist drei Führungsaussparungen 16 auf, die sich nutartig in axialer Richtung erstrecken und der Aufnahme von jeweils einem Vorsprung 14 der Ankerscheibe 13 dienen. Von den Vorsprüngen 14 ist wegen der stufenartigen Schnittdarstellung in Fig. 1 nur einer erkennbar. Durch die Führung der Vorsprünge 14 in den Führungsaussparungen 16 wird im wesentlichen ein Verdrehen der Ankerplatte 13 um die Welle 5 verhindert. Beim Bremsvorgang entsteht somit zuverlässig Reibung zwischen der Ankerplatte 13 und dem Bremsrotor 20. Wie aus Fig. 3 und Fig. 2 erkennbar ist, sind zwei in Umfangsrichtung geschlossen umlaufende Dichtungen 18 in dem Führungsring 15 vorgesehen, und zwar je eine Dichtung 18 zur Abdichtung des Führungsrings 15 gegen den Magnetkörper 17 und gegen das Brems-Lagerschild 4. Der durch den Führungsring 15 definierte Innenraum der Bremse 10 ist somit zumindest umfangsseitig vollständig abgedichtet. Der Führungsring 15 ist im Spritzgußverfahren aus Kunststoff gefertigt. Die gespritzten Dichtungen 18 sind in umlaufenden Nuten des Führungsrings 15 angeordnet.

Weiterhin ist in den Führungsring 15 ein Stecker 26 eines Steckverbinders 25 integriert, der dem elektrischen Anschluß der Bremse 10 dient. Der Stecker 26 ist im montierten Zustand der Bremse 10 in eine entsprechende Buchse 27 eingesteckt, die an dem Brems-Lagerschild 4 befestigt ist. Von dort führt ein nicht gezeigtes Kabel durch die Kabeldurchführung 7 zu dem Klemmenkasten 8 (siehe Fig. 1), der mit dem Gehäuse 3 des Elektromotors 1 verbunden ist. In dem Klemmenkasten 8 befindet sich der Anschluß für die elektrische Versorgung sowohl des Elektromotors 1 als auch der Bremse 10. Alternativ kann der Klemmenkasten auch an der Bremse angeordnet sein. In diesem Fall führt eine elektrische Leitung zur Versorgung des Elektromotors von der Bremse über einen Steckverbinder, der in dem Führungsring angeordnet ist, zu dem Elektromotor.

Im folgenden wird nun auf die Vorkomplettierung und auf die Montage der Bremse 10 an dem Elektromotor 1 eingegangen. Zur Montage wird die Bremse 10 vorkomplettiert vom Werk angeliefert. Hierzu ist die Bremse 10 bis auf den Mitnehmer 28 vorkomplettiert. Der Führungsring 15 ist mit zwei kurzen Schrauben 19 an dem Magnetkörper 17 angeschraubt (siehe Fig. 2). Die Position der zwei kurzen Schrauben 19 zueinander ist aus Fig. 1 erkennbar. Sie liegen bezüglich der Rotationsachse der Welle 5 achsensymetrisch an einander gegenüberliegenden Stellen der Bremse 10.

Zwei weitere kurze Schrauben 9 dienen der Befestigung des Brems-Lagerschilds 4 an dem Gehäuse 3 des Elektromotors 1, und zwar an Positionen, die durch Verlängerung der Längsachse der kurzen Schrauben 19 im montierten Zustand der Bremse 10 definiert sind (Fig. 2).

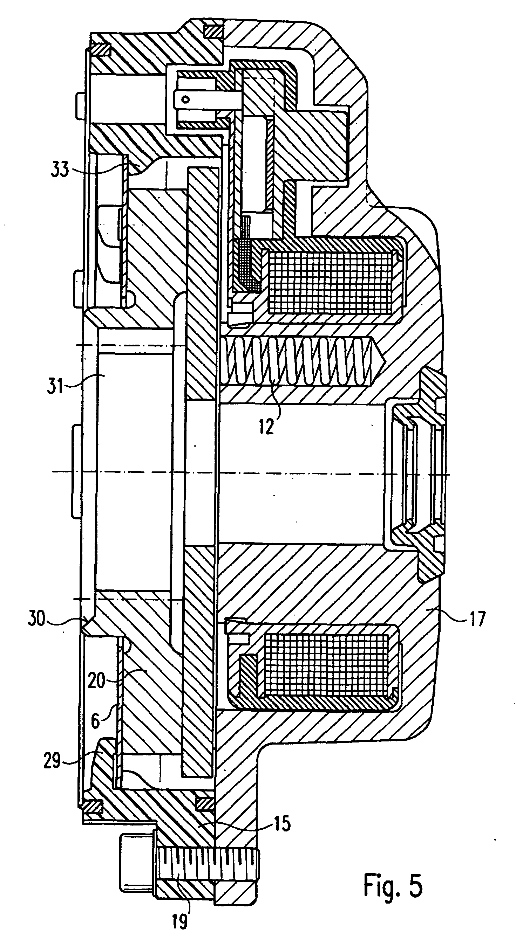

Wie anhand von Fig. 4 erkennbar ist, wird vor der Montage der Bremse 10 an dem Gehäuse 3 des Elektromotors noch das Reibblech 6 in der Art einer Bajonett-Verbindung an der Bremse 10 angebracht. Der Führungsring 15 weist drei Pratzen 29 auf, deren Funktion noch beschrieben wird. Dementsprechend weist das Reibblech 6 drei korrespondierende Ausnehmungen 32 auf. Das Reibblech 6 wird nun an der Stirnseite der Bremse 10 durch Linearbewegung etwa parallel zur Roationsachse, entlang der sich später die Welle 5 erstreckt, an den Pratzen 29 vorbei zur Anlage an den Bremsrotor 20 gebracht und durch Drehbewegung um die Rotationsachse im Uhrzeigersinn gegen Herausfallen gesichert. Bei der Linearbewegung bildet eine Schulter 33 an den Führungsring 15, die etwa das Profil einer Nase hat (Fig. 5), einen Anschlag.

Im vorkomplettierten Zustand zusätzlich mit Reibblech 6 stützen sich die Druckkräfte der Druckfedern 12 über die Bauteile Ankerplatte 13, Bremsrotor 12 und Reibblech 6 an den Pratzen 29 des Führungsrings 15 ab.

Bei der anschließenden Montage der Bremse 10 wird nun der Führungsring 15 so positioniert, daß der Stecker 26 in die Buchse 27 gesteckt ist und werden zwei lange Schrauben 24 durch den Führungsring 15 an den in Fig. 1 gezeigten Stellen hindurchgesteckt und durch entsprechende Bohrungen in dem Brems-Lagerschild 4 hindurch in Gewindebohrungen in dem Gehäuse 3 des Elektromotors 1 eingeschraubt (Fig. 3).

In Montageposition werden die Pratzen 29 des Führungsringes 15 entlastet. Das Reibblech 6 liegt auf einer Planfläche des Bremslagerschildes auf und es stellt sich ein für den einwandfreien Betrieb der Bremse erforderlicher Arbeitsluftspalt zwischen der Ankerplatte 13 und dem Magnetkörper 17 ein. Durch Anpreßkräfte, die über die Schulter 33 von dem Führungsring 15 übertragen werden, wird das Reibblech 6 verdrehsicher gegen das Brems-Lagerschild 4 gedrückt.

Der Arbeitsluftspalt ist definiert durch den Abstand der am Reibblech 6 anliegenden Schulter 33 des Führungsringes 15 zur Auflagefläche des Magnetkörpers 17 einerseits und den Dickenmaßen von Ankerplatte 13 und Bremsrotor 20 andererseits. Da der Führungsring 15 fest an dem Magnetkörper 17 anliegt, ist der Arbeitsluftspalt durch den Abstand von der Anlagefläche der Schalter 33 zur Anlagefläche für den Magnetkörper 17, also durch die Maße des Führungsringes und die Maße des Bremsrotors 20 sowie der Ankerplatte 13 gegeben.

Der Steckverbinder, der zumindest teilweise in den Führungsring 15 integriert ist, kann in dem Fachmann geläufiger Weise auch andersartig ausgebildet sein. Als erfindungswesentlich wird zumindest der Gedanke der Integration eines Teils des Steckverbinders oder des gesamten Steckverbinders in den Führungsring 15 beansprucht.

Anhand von Fig. 4 ist noch ein weiteres vorteilhaftes Merkmal der erfindungsgemäßen vorkomplettierten Bremse erkennbar. Der Bremsrotor weist eine Aufnahmeöffnung 31 zur Aufnahme des Mitnehmers 28 auf, der an der Welle 5 des Elektromotors befestigt ist. Um den Mitnehmer 28 besser in die Aufnahmeöffnung 31 einführen zu können, bzw. um die vorkomplettierte Bremse 10 besser auf den Mitnehmer 28 aufstecken zu können, weist der Bremsrotor 20 an seinem stirnseitigen, im montierten Zustand dem Brems-Lagerschild zugewandten Ende eine Einführabschrägung 30 auf, so daß das Einführen des Mitnehmers 28 erleichtert ist.

Der Mitnehmer 28 weist, wie aus der oberen Hälfte von Fig. 1 erkennbar ist, einen zahnradähnlichen Querschnitt auf. Dementsprechend ist der Innenrand der Aufnahmeöffnung 31 des Bremsrotors 20 geformt (Fig. 4).

Bei der Montage der Bremse 10 wird die komplette Bremse 10 auf den Mitnehmer 28 bzw. auf die Welle 5 aufgesteckt, wobei unter leichtem Hin- und Herdrehen der Welle 5 und/oder des Bremsrotors 20 die vorkomplettierte Bremse 10 mit dem Elektromotor gefügt und anschließend verschraubt wird.

Der erfindungsgemäße Motor hat den Vorteil, daß er auch ohne die vorkomplettierte Bremse funktionsfähig ist. Andererseits ist die vorkomplettierte Bremse nicht ohne das Brems-Lagerschild des Elektromotors funktionsfähig. Hierfür gibt es zwei wesentliche Gründe:
- Einerseits fehlt die notwendige Abstützung in axialer Richtung beim Bremsvorgang, da sowohl die Ankerplatte 13 als auch der Bremsrotor 20 axial beweglich ausgestaltet sind;
- andererseits kann die an dem Reibblech 6 erzeugte Reibungswärme beim Bremsen nicht in ausreichendem Maße an die Luft abgegeben werden, so daß das Reibblech verglühen würde. Es ist daher mit einem anderen Körper bei geringem Wärmewiderstand verbunden, nämlich mit dem Brems-Lagerschild 4 des Elektromotors. An dieses wird die Bremswärme des Reibblechs 6 abgeführt. Das Brems-Lagerschild 4 ist vorzugsweise aus Metall gefertigt und weist eine wesentlich größere Wärmekapazität auf, als das Reibblech 6.

Ein weiterer Grund dafür, daß die vorkomplettierte Bremse 10 nicht ohne das Brems-Lagerschild 4 des Elektromotors funktionsfähig ist, liegt darin, daß ihr die Dichtheit gegen eindringende Feuchtigkeit oder gegen eindringenden Schmutz aus der Umgebung fehlt. Die Dichtheit ist erst mit der Montage an dem Brems-Lagerschild 4 gegeben.

### Bezugzeichenliste

- 1: Elektromotor
- 2: Rotor
- 3: Gehäuse
- 4: Brems-Lagerschild
- 5: Welle
- 6: Reibblech
- 7: Kabeldurchführung
- 8: Klemmenkasten
- 9: kurze Schraube
- 10: Bremse
- 11: Bremsspule
- 12: Druckfeder
- 13: Ankerplatte
- 14: Vorsprung
- 15: Führungsring
- 16: Führungsaussparung
- 17: Magnetkörper
- 18: Dichtung
- 19: kurze Schraube
- 20: Bremsrotor
- 21: erste Bremsfläche
- 22: zweite Bremsfläche
- 24: lange Schraube
- 25: Steckverbinder
- 26: Stecker
- 27: Buchse
- 28: Mitnehmer
- 29: Pratze
- 30: Einführschrägung
- 31: Aufnahmeöffnung
- 32: Ausnehmung
- 33: Schulter

## Patentansprüche

1. Elektromotor (1) mit
- einem Rotor (2) und
- einem Gehäuse (3), das ein endseitiges Brems-Lagerschild (4) zum Lagern einer durch das Brems-Lagerschild (4) hindurchführenden Welle (5) des Rotors (2) hat, und
- einer elektromagnetisch betätigbaren Bremse (10), die Folgendes aufweist:
- einen Magnetkörper (17) mit einer Bremsspule (11),
- eine von dem Magnetkörper (17) entgegen einer von Federn aufgebrachten Bremsandruckkraft anziehbare Ankerplatte (13), die in einer Führungseinrichtung (15) im Wesentlichen drehfest aber in Richtung der Welle (5) axial verschiebbar ist, und
- einen Bremsrotor (20), auf dem die Ankerplatte (13) bei stromloser Bremsspule (11) mit der Bremsändruckkraft aufliegt und der an der Welle (5) befestigt ist,
**dadurch gekennzeichnet, dass**
die Bremse (10) vorkomplettiert ausgebildet und an das Gehäuse (3) anschraubbar ist, wobei
die Führungseinrichtung (15) als Ring ausgebildet ist, der mit dem Magnetkörper (17) verbunden, insbesondere verschraubt ist, und/oder der Bremsrotor (20) drehfest aber axial verschiebbar auf einem Mitnehmer (28) aufgesetzt ist, der mit der Welle (5) verbunden ist.

2. Elektromotor nach Anspruch 1,
**gekennzeichnet durch**
eine Steckereinrichtung (25) zum Zuführen von Strom zu der Bremsspule (11), die beim Anschrauben der Bremse (10) an das Gehäuse (3) zusammensteckbar ist.

3. Elektromotor nach Anspruch 1 oder 2,
**dadurch gekennzeichnet, dass**
durch den Ring in axialer Richtung eine Distanz zwischen dem Brems-Lagerschild (4) und dem Bremsschild (17) festgelegt ist, so dass ein festes, nicht nachstellbares axiales Spiel für die Betätigung der Bremse (10) definiert ist.

4. Elektromotor nach einem der Ansprüche 1 - 3,
**dadurch gekennzeichnet, dass**
der Ring zumindest eine nutartige, sich in axialer Richtung erstreckende Führungsaussparung (16) zur Aufnahme eines Vorsprungs (14) der Ankerplatte (13) aufweist.

5. Elektromotor nach einem der Ansprüche 1 - 4,
**dadurch gekennzeichnet, dass**
der Ring und der Magnetkörper (17) eine Dichteinrichtung (18) zur Abdichtung der vorkomplettierten Bremse (10) aufweisen.

6. Elektromotor nach einem der Ansprüche 1 - 5,
**dadurch gekennzeichnet, dass**
der Ring, insbesondere im Spritzgussverfahren, aus einem Kunststoff gefertigt ist.

7. Elektromotor nach einem der Ansprüche 1 - 6,
**dadurch gekennzeichnet, dass**
der Ring erste Teile (26) der Steckereinrichtung (25) und das Brems-Lagerschild (4) zweite Teile (27) der Steckereinrichtung umfasst, die derart ausgebildet sind, dass die ersten (26) und die zweiten (27) Teile beim Anschrauben der Bremse (10) an das Gehäuse (3) miteinander in elektrischen Kontakt kommen.

8. Elektromotor nach Anspruch 1 - 7,
**dadurch gekennzeichnet, dass**
zwischen dem Bremsrotor (20) und dem Brems-Lagerschild (4) ein Reibblech (6) angeordnet ist, auf wlechem der Bremsrotor (20) bei stromloser Bremsspule (11) Bremsarbeit leistet.

9. Elektromotor nach einem der Ansprüche 1 - 8,
**dadurch gekennzeichnet, dass**
der Bremsrotor (20) einen in axialer. Richtung einstückig durchgehenden Bremskörper aufweist zur Erzeugung von Bremsreibung auf der Ankerpatte (13) und gegebenenfalls an dem Brems-Lagerschild (4) bzw. auf dem Reibblech (6) .

10. Elektromotor nach einem der Ansprüche 1 - 9,
**dadurch gekennzeichnet, dass**
der Bremsrotor (20) eine stirnseitige, im Wesentlichen rotationssymmetrische Bremsfläche (21) zur Erzeugung von Bremsreibung auf der Ankerplatte (13) und gegebenenfalls eine zweite solche Bremsfläche (22) zur Erzeugung von Bremsreibung an dem Bremslagerschild (4) bzw. auf dem Reibblech (6) hat.

11. Elektromotor nach einem der Ansprüche 1 - 10,
**dadurch gekennzeichnet, dass**
der Bremsrotor (20) eine Einführabschrägung (30) aufweist, die bei der Montage der vorkomplettierten Bremse (10) ein Einführen eines Mitnehmers (28) der Welle (5) oder der Welle in eine Aufnahmeöffnung (31) des Bremsrotors (20) erleichtert.

## Claims

1. An electric motor (1) with
- rotor (2) and
- a housing (3), which has a brake mounting plate (4) at one end for mounting a shaft (5) of the rotor (2) passing through
the brake mounting plate (4), and
- an electromagnetically actuatable brake (10) which has the following:
- a magnetic body (17) with a brake coil (11),
- an armature plate (13) which can be attracted by the magnetic body (17) against a brake pressure force applied by springs, and which substantially precludes relative rotation in a guide direction (15) but is axially displaceable in the direction of the shaft (5), and
- a brake rotor (20) on which the armature plate (13) bears with the brake pressure force when the brake coil (11) is de-energised and which is mounted on the shaft (5),
**characterised in that** the brake (10) is prefinished and can be screwed to the housing (3), wherein
the guide means (15) is in the form of a ring which is connected to the magnetic body (17), in particular screwed thereto, and/or the brake rotor (20) is fitted in a manner precluding relative rotation but axially displaceably on a drive means (28) which is connected to the shaft (5).

2. An electric motor according to Claim.1, **characterised by** a plug means (25) for supplying current to the brake coil (11) which can be fitted together upon screwing the brake (10) on to the housing (3).

3. An electric motor to Claim 1 or 2, **characterised in that** the ring determines in axial direction a distance between the brake mounting plate (4) and the brake plate (17) so that a fixed non-adjustable axial clearance for the actuation of the brake (10) is defined.

4. An electric motor to any one of Claims 1 to 3, **characterised in that** the ring has a slot-like axially extending guide recess (16) to receive a projection (14) of the armature plate (13).

5. An electric motor to any one of Claims 1 to 4, **characterised in that** the ring and the magnetic body (17) have a seal means (18) for sealing the prefinished brake (10)

6. An electric motor to any one of Claims 1 to 5, **characterised in that** the ring is produced from a plastics material, in particular in an injection-moulding process.

7. An electric motor to any one of Claims 1 to 6, **characterised in that** the ring comprises first parts (26) of the plug means (25) and the brake mounting plate (4) comprises second parts (27) of the plug means, which are so formed that the first (26) and second parts (27) come into electrical contact with one another when the brake (10) is screwed to the housing (3).

8. An electric motor to any one of Claims 1 to 7, **characterised in that** between the brake rotor (20) and the brake mounting plate (4) there is disposed a friction plate (6), on which the brake rotor (20) performs braking work when the brake coil (11) is de-energised.

9. An electric motor to any one of Claims 1 to 8, **characterised in that** the brake rotor (20) has a brake body which is axially continuous in one piece for generating braking friction on the armature plate (13) and, optionally, on the brake mounting plate (4) or on the friction plate (6) .

10. An electric motor to any one of Claims 1 to 9, **characterised in that** the brake rotor (20) has an end-face substantially rotationally symmetrical brake surface (21) for generating braking friction on the armature plate (13) and, optionally, a second such brake surface (22) for generating braking friction on the brake mounting plate (4) or on the friction plate (6).

11. An electric motor to any one of Claims 1 to 10, **characterised in that** the brake rotor (20) has an entry bevel (30) which upon installing the prefinished brake (10) facilitates insertion of a drive means (28) of the shaft (5) or the shaft into an accommodating opening (31) of the brake rotor (20).

## Revendications

1. Moteur électrique (1) comportant
- un rotor (2) et
- un carter (3) qui a une flasque de frein (4) du côté extrémité pour supporter un arbre (5) du rotor (2) traversant la flasque de frein (4), et
- un frein (10) à commande électromagnétique, qui présente ce qui suit:
- un corps magnétique (17) muni d'une bobine de frein (11),
- une plaque d'induit (13), pouvant être attirée par le corps magnétique (17) contre une force de pression de freinage appliquée par des ressorts, qui est essentiellement fixe en rotation mais capable de translation axiale dans la direction de l'arbre (5) dans un dispositif de guidage (15), et
- un rotor de frein (20) sur lequel la plaque d'induit (13) s'appuie par la force de pression de freinage lorsque la bobine de frein (11) est hors tension et qui est fixé sur l'arbre (5),
**caractérisé en ce que**
le frein (10) est réalisé pré-assemblé et peut être vissé sur le carter (3),
le dispositif de guidage (15) étant réalisé en anneau qui est assemblé, en particulier vissé, au corps magnétique (17), et/ou le rotor de frein (20) étant mis en place fixe en rotation mais capable de translation axiale sur un entraîneur (28) qui est relié à l'arbre (5).

2. Moteur électrique selon la revendication 1,
**caractérisé par**,
un dispositif connecteur (25) pour acheminer du courant vers la bobine de frein (11), qui peut être connecté lors du vissage du frein (10) au carter (3).

3. Moteur électrique selon la revendication 1 ou 2,
**caractérisé en ce que**
une distance est définie par l'anneau dans la direction axiale entre la flasque de frein (4) et la bride de frein (17), de sorte qu'un jeu axial fixe non ajustable est défini pour l'actionnement du frein (10) .

4. Moteur électrique selon l'une des revendications 1 à 3,
**caractérisé en ce que**
l'anneau présente au moins un évidement de guidage (16) du genre rainure, s'étendant dans la direction axiale, pour recevoir une saillie (14) de la plaque d'induit (13).

5. Moteur électrique selon l'une des revendications 1 à 4,
**caractérisé en ce que**
l'anneau et le corps magnétique (17) présentent un dispositif d'étanchéité (18) pour étanchéifier le frein (10) pré-assemblé.

6. Moteur électrique selon l'une des revendications 1 à 5,
**caractérisé en ce que**
l'anneau est réalisé en une matière plastique, en particulier par moulage par injection.

7. Moteur électrique selon l'une des revendications 1 à 6,
**caractérisé en ce que**
l'anneau comprend des premières pièces (26) du dispositif connecteur (25) et la flasque de frein (4) des secondes pièces (27) du dispositif connecteur qui sont réalisées de manière telle que lors du vissage du frein (10) au carter (3) les premières (26) et secondes (27) pièces viennent en contact électrique mutuel.

8. Moteur électrique selon l'une des revendications 1 à 7,
**caractérisé en ce que**
entre le rotor de frein (20) et la flasque de frein (4) est disposée une plaque de friction (6) sur laquelle le rotor de frein (20) fournit du travail de freinage lorsque la bobine de freinage (11) est hors tension.

9. Moteur électrique selon l'une des revendications 1 à 8,
**caractérisé en ce que**
le rotor de frein (20) présente un corps de frein traversant d'un seul tenant dans la direction axiale pour créer une friction de freinage sur la plaque d'induit (13) et le cas échéant sur la flasque de frein (4) ou sur la plaque de friction (6).

10. Moteur électrique selon l'une des revendications 1 à 9,
**caractérisé en ce que**
le rotor de frein (20) présente une surface de freinage (21) frontale essentiellement à symétrie de révolution pour créer une friction de freinage sur la plaque d'induit (13) et le cas échéant une seconde surface de freinage (22) de ce type pour créer une friction de freinage sur la flasque de frein (4) ou sur la plaque de friction (6).

11. Moteur électrique selon l'une des revendications 1 à 10,
**caractérisé en ce que**
le rotor de frein (20) présente un chanfrein d'introduction (30) qui, lors du montage du frein (10) pré-assemblé, facilite une introduction d'un entraîneur (28) de l'arbre (5) ou de l'arbre dans un orifice de réception (31) du rotor de frein (20) .
